# EUROPEAN PATENT APPLICATION

(11) **EP 1 765 032 A2**
(43) Date of publication of application: **21.03.2007**
(21) Application number: 06014384.9
(22) Date of filing: 11.07.2006
(51) Int. Cl.: H04Q 7/38, H04Q 7/32, H04L 12/28

(54) **Method for setting communication mode in wireless terminal**

(30) Priority: 15.09.2005 KR 20050086364
(71) Applicant: Samsung Electronics Co., Ltd., Suwon-si, Gyeonggi-Do (KR)
(72) Inventor: Park, Jun-Ho, Yeongtong-gu, Suwon-si, Gyeonggi-do (KR); Kim, Hyung-Jin, Yeongtong-gu, Suwon-si, Gyeonggi-do (KR)
(74) Representative: Lang, Johannes

(57) **Abstract**

A method for setting a communication mode in a wireless terminal which can reduce the inefficiency due to frequent handover in a wireless terminal that performs a communication service through a GERAN/UTRAN network and a wireless network. The method for setting a communication mode in a wireless terminal that performs a multi-mode communication service through a GSM/EDGE radio access network (GERAN)/UTRAN network and a wireless network, includes checking for a predetermined time a movement frequency of the wireless terminal that performs the communication service as moving through the GERAN/UTRAN network and the wireless network, setting a communication mode of the wireless terminal through either of the GERAN/UTRAN network and the wireless network if the movement frequency of the wireless terminal is larger than a reference movement frequency, and performing the communication service in the set communication mode as moving through the GERAN/UTRAN network and the wireless network.

## Description

### BACKGROUND OF THE INVENTION

### 1. Field of the Invention

The present invention relates to a method for setting a communication mode in a wireless terminal. More particularly, the present invention relates to a method for setting a communication mode in a wireless terminal which can reduce inefficiency due to frequent handover in a wireless terminal that performs a communication service through a GERAN/UTRAN network and a wireless network.

### 2. Description of the Related Art

Unlicensed mobile access (UMA) standard deals with requirements and structural design for interworking a GSM/EDGE radio access network (GE-RAN) and a WLAN. UMA technology provides a GERAN/UTRAN mobile service with an access to an unlicensed spectrum technology that includes Bluetooth and IEEE 802.11, and a solution based on an UMA specification can support an active mobile voice call between networks and a connection between cells of a data session without permitting any service interference.

Accordingly, by using the UMA technology, subscribers can receive a continuous mobile voice and data service when a switchover is performed between access networks.

A wireless terminal that is connected to a broadband IP network via an UMA network controller (UNC) is authenticated/permitted to access voice and data in the GERAN/UTRAN via an unlicensed wireless network. In a cellular radio access network and an unlicensed mobile access network (UMAN), subscriber's present position information stored in a core network is updated in the same manner, and the mobile voice and data are transferred through the networks.

When the wireless terminal having the UMA moves out of the unlicensed wireless network range, the UNC and the wireless terminal perform roaming through a LAN, and the roaming process equally occurs in both the networks without interruption.

If a user of the wireless terminal moves to the unlicensed wireless network range in a state that he/she is making a call and the data session in the GERAN/UTRAN network, handover in voice call and data session automatically occurs between the two networks.

That is, the UMA is in a dual mode and a handover automatically occurs between the unlicensed wireless network range and the GERAN/UTRAN network.

The UMA technology has been proposed to provide the GERAN/UTRAN service through the unlicensed network (for example, Bluetooth and IEEE 802.11). In addition, the UMA technology provides uninterrupted call service and data transmission by providing a handover between the two networks (for example, unlicensed network and GERAN/UTRAN network).

However, the wireless terminal may have a problem in the case where the handover frequently occurs between the unlicensed wireless network range and the GERAN/UTRAN network. The UMA technology fixes a handover policy according to signal strength in the unlicensed wireless network and the GERAN/UTRAN network, but does not fix a handover policy according to the frequency of handover of the wireless terminal.

The unlicensed network has characteristics different from those of the GERAN/UTRAN network, and has a short distance from a base transceiver station (BTS). In the case of using IEEE 802.11 as the unlicensed network, an access point (AP) serves as the BTS, and a general transmission distance in IEEE 802.11 is about 100m. In the case of using Bluetooth, the transmission distance is 10m at maximum. Accordingly, if the wireless terminal moves, handover frequently occurs in the unlicensed network in comparison to the GERAN/UTRAN network.

The wireless terminal may frequently move between two networks (for example, unlicensed network and GERAN/UTRAN network), and this causes the power consumption of the wireless terminal to be increased and the internal operation of the wireless terminal to be complicated.

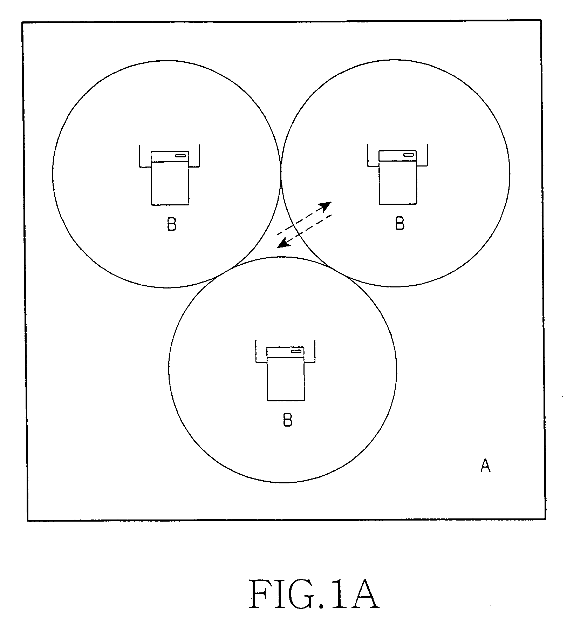

FIG 1A is a view explaining a wireless terminal that moves between the GERAN/UTRAN network A and the wireless network B. As shown in FIG 1A, if the wireless terminal frequently moves between the wireless network B and the GERAN network A, a switching between an UMA stack in the wireless terminal and the existing GERAN stack occurs too frequently.

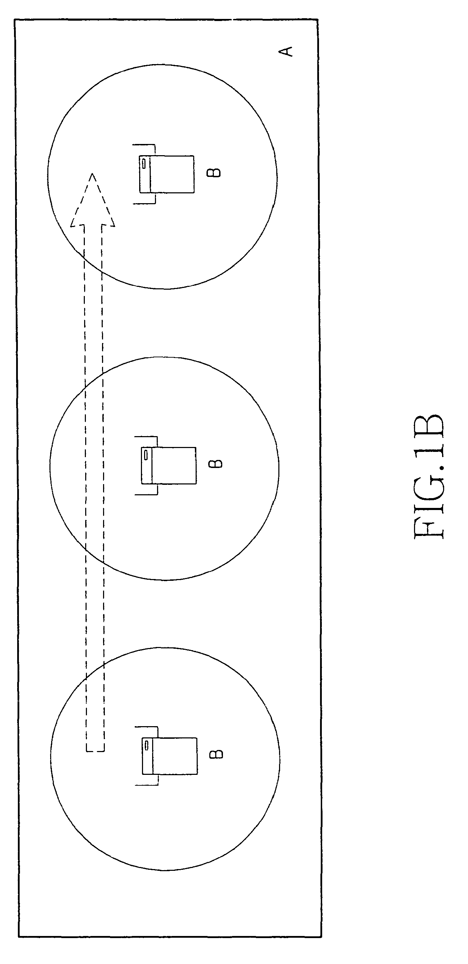

FIG. 1b is a view explaining a wireless terminal that is frequently going in and out between the wireless network B and the GERAN network A. In this case, a switching occurs too frequently between the UMA stack in the wireless terminal and the GERAN stack.

As shown in FIGs. 1A and 1B, if the wireless terminal frequently moves between the wireless network B and the GERAN network and the switching occurs too frequently between the UMA stack and the existing GERAN stack, a battery power of the wireless terminal is reduced and the inefficiency is increased in other hardware and software operations.

### SUMMARY OF THE INVENTION

Accordingly, exemplary embodiments of the present invention address the above and other problems occurring in the prior art, and an object of certain exemplary embodiments of the present invention is to provide a method for setting a communication mode in a wireless terminal which can reduce the inefficiency due to frequent handover in a wireless terminal that performs a multi-mode communication service through a GERAN/UTRAN network and a wireless network.

In order to accomplish the above object, there is provided a method for setting a communication mode in a wireless terminal that performs a multi-mode communication service through at least two networks, according to an exemplary embodiment of the present invention, which includes checking for a predetermined time a movement frequency of the wireless terminal that performs the communication service while moving through at least two networks. A communication mode of the wireless terminal is set through any one of the at least two networks if the movement frequency of the wireless terminal is larger than a reference movement frequency and communication service is performed in the set communication mode while moving through the at least two networks.

According to an exemplary embodiment of the present invention, there is provided a method for setting a communication mode in a wireless terminal that performs a multi-mode communication service through a GSM/EDGE radio access network GERAN/UTRAN network and a wireless network, which includes checking for a predetermined time a movement frequency of the wireless terminal that performs the communication service while moving through the GERAN/UTRAN network and the wireless network. A communication mode of the wireless terminal is set through either of the GERAN/UTRAN network and the wireless network if the movement frequency of the wireless terminal is larger than a reference movement frequency, and communication service is performed in the set communication mode while moving through the GERAN/UTRAN network and the wireless network.

According to an exemplary embodiment of the present invention, there is provided a method for setting a communication mode in a wireless terminal that performs a multi-mode communication service through at least two networks, which includes displaying kinds of communication modes if a communication mode setting is selected in the wireless terminal, setting a corresponding communication mode for performing a communication service through a corresponding network among at least two networks if the corresponding communication mode is selected among the displayed communication modes, and performing the communication service in the set communication mode while moving through the at least two networks.

According to an exemplary embodiment of the present invention, there is provided a method for setting a communication mode in a wireless terminal that performs a multi-mode communication service through a GSM/EDGE radio access network GERAN/UTRAN network and a wireless network, which includes displaying kinds of communication modes if a communication mode setting is selected in the wireless terminal, setting a communication mode for performing a communication service through the GERAN/UTRAN network and performing the communication service while moving through the GERAN/UTRAN network and the wireless network if a GERAN/UTRAN mode is selected among the displayed communication modes, setting a communication mode for performing a communication service through the wireless network and performing the communication service while moving through the GERAN/UTRAN network and the wireless network if an unlicensed mobile access (UMA) mode is selected among the displayed communication modes, and setting a communication mode for performing a communication service through either of the GERAN/UTRAN network and the wireless network if a movement mode is selected among the displayed communication modes.

### BRIEF DESCRIPTION OF THE DRAWINGS

The above and other objects, features and advantages of the present invention will be more apparent from the following detailed description taken in conjunction with the accompanying drawings, in which like reference numerals will be understood to refer to like parts, components and structures, where:
FIGs. 1A and 1B are views explaining a wireless terminal that moves through a GERAN/UTRAN network and a wireless network, respectively;
FIG 2 is a flowchart illustrating a process of setting a communication mode in a wireless terminal according to a first exemplary embodiment of the present invention; and
FIG 3 is a flowchart illustrating a process of setting a communication mode in a wireless terminal according to a second exemplary embodiment of the present invention.

### DETAILED DESCRIPTION OF EXEMPLARY EMBODIMENTS

Certain exemplary embodiments of the present invention will be described in detail hereinafter with reference to the accompanying drawings. In the following description of the present invention, as noted above, the same drawing reference numerals are refer to the same elements throughout the drawings. Additionally, a detailed description of known functions and configurations incorporated herein is omitted for clarity and conciseness.

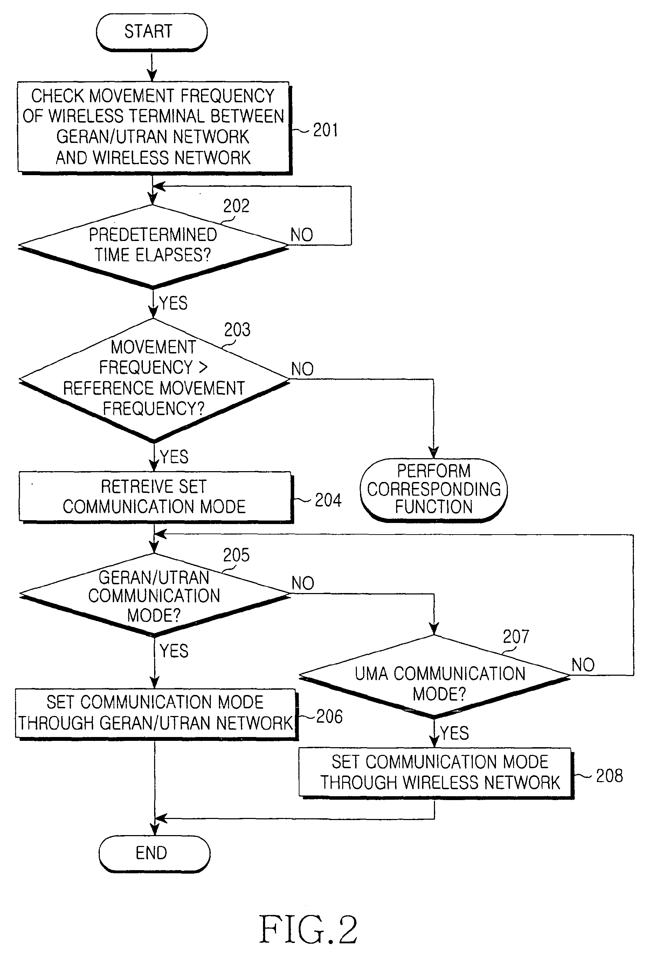

FIG 2 is a flowchart illustrating a process of setting a communication mode in a wireless terminal according to a first exemplary embodiment of the present invention. The wireless terminal is provided with a UMA technology that can perform a communication service through a GERAN/UTRAN network and a wireless network.

Hereinafter, the first exemplary embodiment of the present invention will be explained with reference to FIGs. 1A, 1B and 2.

Referring to FIG 2, whenever the wireless terminal moves through a GERAN/UTRAN network A and a wireless network B, a control unit of the wireless terminal performs a handover through a switching between an UMA protocol stack in the wireless terminal and a GERAN/UTRAN protocol stack.

In performing the above-described process, the control unit proceeds to step 201 and checks the movement frequency whenever the wireless terminal moves through the GERAN/UTRAN network A and the wireless network B.

If a predetermined time elapses while the control unit checks the movement frequency of the wireless terminal in step 201, the control unit senses this in step 202, and compares the movement frequency of the wireless terminal checked during the predetermined time with a reference movement frequency. If the checked movement frequency of the portable terminal exceeds the reference movement frequency, the control unit senses this in step 203, and proceeds to step 204 to retrieve the kind of the communication mode set by the wireless terminal.

If it is checked that a GERAN/UTRAN communication mode is set in the wireless terminal in step 204, the control unit senses this in step 205, and proceeds to step 206 to set the wireless terminal by the GERAN/UTRAN communication mode through the GERAN/UTRAN communication network A. The wireless terminal set by the GERAN/UTRAN communication mode in step 206 performs the communication service for voice data and data communication only in the GERAN/UTRAN communication mode through the GERAN/UTRAN network A as it moves through the GERAN/UTRAN network A and the wireless network B.

If it is checked that an UMA communication mode is set in the wireless terminal in step 204, the control unit senses this in step 207, and proceeds to step 208 to set the wireless terminal by the UMA communication mode through the wireless network B. The wireless terminal set by the UMA communication mode in step 208 performs the communication service for voice data and data communication only in the UMA communication mode through the wireless network B as it moves through the GERAN/UTRAN network A and the wireless network B.

In the meantime, if the checked movement frequency of the portable terminal exceeds the reference movement frequency, the control unit senses this in step 203, and may directly set the wireless terminal by the GERAN/UTRAN communication mode.

In the first exemplary embodiment of the present invention, it is exemplified that the wireless terminal is set by the communication mode and performs the corresponding communication service through the movement frequency of the wireless terminal. However, the above-described process may also be performed in the same manner through a moving speed of the wireless terminal in addition to the movement frequency of the wireless terminal. Specifically, if the moving speed of the wireless terminal exceeds a reference speed, the wireless terminal is set by the communication mode and performs the corresponding communication service.

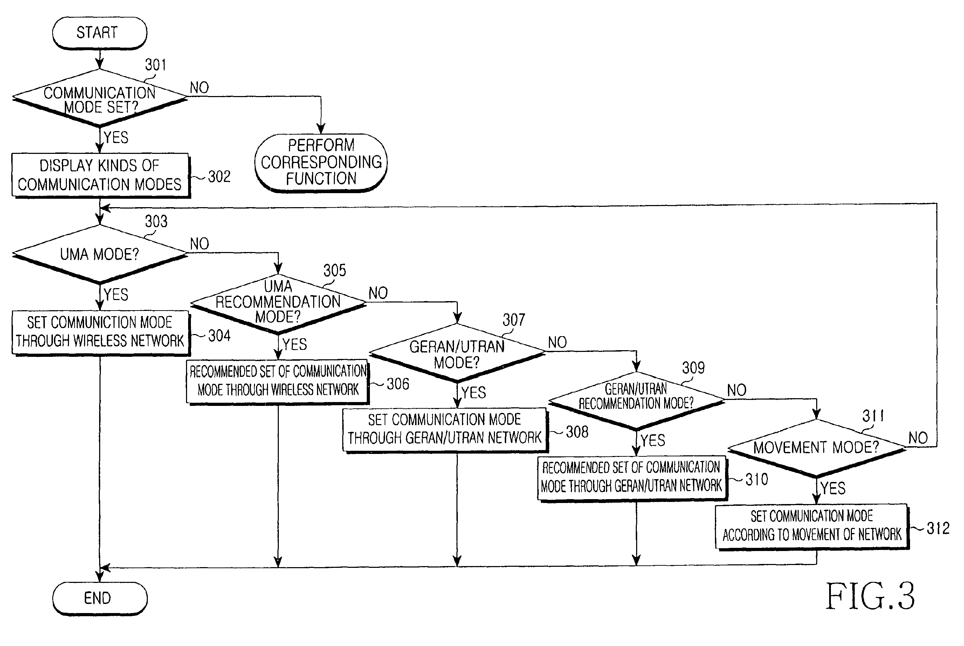

FIG 3 is a flowchart illustrating a process of setting a communication mode in a wireless terminal according to a second exemplary embodiment of the present invention. The wireless terminal is provided with a UMA technology that can perform a communication service through a GERAN/UTRAN network and a wireless network.

Hereinafter, the second exemplary embodiment of the present invention will be explained with reference to FIGs. 1A, 1B and 3.

Referring to FIG 3, if a communication mode setting is selected among menus of the wireless terminal, a control unit of the wireless terminal senses this in step 301, and proceeds to step 302 to display kinds of communication modes that can be set.

If a general UMA communication mode is selected among the displayed communication modes in step 302, the control unit senses this in step 303, and proceeds to step 304 to set the wireless terminal by the UMA communication mode through the wireless network B. The wireless terminal set by the UMA communication mode in step 304 performs the communication service for voice data and data communication only in the UMA communication mode through the wireless network B as it moves through the GERAN/UTRAN network A and the wireless network B.

If a UMA recommendation mode is selected among the displayed communication modes in step 302, the control unit senses this in step 305, and proceeds to step 306 to set the wireless terminal by the UMA recommendation mode through the wireless network B so as to recommend that the wireless terminal is used in the UMA communication mode through the wireless network B. The wireless terminal set by the UMA recommendation mode in step 306 performs the communication service for voice data and data communication in the UMA communication mode through the wireless network B as it moves through the GERAN/UTRAN network A and the wireless network B if it is possible to connect the wireless terminal to the wireless network. If the frequency of handover occurrence for a predetermined time in the UMA recommendation mode exceeds a reference value, the wireless terminal proceeds to step 312 to change the present mode to a movement mode.

If a general GERAN/UTRAN mode is selected among the displayed communication modes in step 302, the control unit senses this in step 307, and proceeds to step 308 to set the wireless terminal by a GERAN/UTRAN communication mode through the GERAN/UTRAN network A. The wireless terminal set by the GERAN/UTRAN communication mode in step 308 performs the communication service for voice data and data communication only in the GERAN/UTRAN communication mode through the GERAN/UTRAN network as it moves through the GERAN/UTRAN network A and the wireless network B.

If a GERAN/UTRAN recommendation mode is selected among the displayed communication modes in step 302, the control unit senses this in step 309, and proceeds to step 310 to set the wireless terminal by the GERAN/UTRAN recommendation mode through the GERAN/UTRAN network A so as to recommend that the wireless terminal is used in the GERAN/UTRAN communication mode through the GERAN/UTRAN network A. The wireless terminal set by the GERAN/UTRAN recommendation mode in step 310 performs the communication service for voice data and data communication in the GERAN/UTRAN communication mode through the GERAN/UTRAN network A as it moves through the GERAN/UTRAN network A and the wireless network B if it is possible to connect the wireless terminal to the GERAN/UTRAN network. If the frequency of handover occurrence for a predetermined time in the GERAN/UTRAN recommendation mode exceeds a reference value, the wireless terminal proceeds to step 312 to change the present mode to the movement mode.

Meanwhile, if a movement mode is selected among the displayed communication modes in step 302, the control unit senses this in step 311, and proceeds to step 312 to set the wireless terminal by a corresponding communication mode through either of the GERAN/UTRAN network A and the wireless network B as it moves through the GERAN/UTRAN network A and the wireless network B. The wireless terminal set by the movement mode in step 312 checks for a predetermined time the movement frequency of the wireless terminal that performs the communication service while moving through the GERAN/UTRAN network and the wireless network. If the movement frequency of the wireless terminal is larger than a reference movement frequency, the control unit senses this, and performs the communication service by setting the wireless terminal by the corresponding communication mode through either of the GERAN/UTRAN network and the wireless network. The control unit may check the moving speed of the wireless terminal in step 312. In this case, if it is checked that the moving speed of the wireless terminal is larger than the reference speed, the control unit senses this, and performs the communication service by setting the wireless terminal by the corresponding communication mode through either of the GERAN/UTRAN network and the wireless network.

As described above, the method for setting a communication mode in a wireless terminal, which performs a communication service through a GERAN/UTRAN network and a wireless network, according to exemplary embodiments of the present invention can reduce the frequency of handover and thus can reduce the power consumption of a battery of the wireless terminal. In addition, the method according to exemplary embodiments of the present invention can reduce the inefficiency in other hardware and software operations.

From the foregoing, although the method for setting a communication mode in a wireless terminal that performs a communication service through a GERAN/UTRAN network and a wireless network has been shown and described with reference to certain exemplary embodiments of the present invention, it will be understood by those skilled in the art that various changes in form and details may be made therein without departing from the spirit and scope of the present invention as defined by the appended claims and the equivalence thereof.

## Claims

1. A method for setting a communication mode in a wireless terminal that performs a multi-mode communication service through at least two networks, the method comprising:
checking for a time period a movement frequency of a wireless terminal that performs communication service while moving through at least two networks;
setting a communication mode of the wireless terminal through any one of the at least two networks if the movement frequency of the wireless terminal is larger than a reference movement frequency; and
performing the communication service in the set communication mode while moving through the at least two networks.

2. A method for setting a communication mode in a wireless terminal that performs a multi-mode communication service through a GSM/EDGE radio access network GERAN/UTRAN network and a wireless network, the method comprising:
checking for a time period a movement frequency of the wireless terminal that performs the communication service while moving through the GERAN/UTRAN network and the wireless network;
setting a communication mode of the wireless terminal through either of the GERAN/UTRAN network and the wireless network if the movement frequency of the wireless terminal is larger than a reference movement frequency; and
performing the communication service in the set communication mode while moving through the GERAN/UTRAN network and the wireless network.

3. The method as claimed in claim 1, wherein the wireless terminal comprises an unlicensed mobile access (UMA) for performing the communication service through the GERAN/UTRAN network and the wireless network.

4. The method as claimed in claim 1, wherein the communication mode of the wireless terminal comprised at least one of a GERAN/UTRAN communication mode through the GERAN/UTRAN network and an UMA communication mode through the wireless communication mode.

5. A method for setting a communication mode in a wireless terminal that performs a multi-mode communication service through at least two networks, the method comprising:
displaying kinds of communication modes if a communication mode setting is selected in a wireless terminal;
setting a corresponding communication mode for performing a communication service through a corresponding network among at least two networks if the corresponding communication mode is selected among the displayed communication modes; and
performing the communication service in the set communication mode while moving through the at least two networks.

6. A method for setting a communication mode in a wireless terminal that performs a multi-mode communication service through a GSM/EDGE radio access network GERAN/UTRAN network and a wireless network, the method comprising:
displaying kinds of communication modes if a communication mode setting is selected in a wireless terminal;
setting a communication mode for performing a communication service through GERAN/UTRAN network and performing the communication service while moving through the GERAN/UTRAN network and the wireless network if a GERAN/UTRAN mode is selected among the displayed communication modes;
setting a communication mode for performing a communication service through the wireless network and performing the communication service while moving through the GERAN/UTRAN network and the wireless network if an unlicensed mobile access (UMA) mode is selected among the displayed communication modes; and
setting a communication mode for performing a communication service through either of the GERAN/UTRAN network and the wireless network if a movement mode is selected among the displayed communication modes.

7. The method as claimed in claim 6, wherein the setting of the communication mode according to the selection of the movement mode comprises:
checking a movement frequency of the wireless terminal for a time period if the movement mode is selected among the displayed communication modes; and
setting the wireless terminal by the communication mode through either of the GERAN/UTRAN network and the wireless network if the movement frequency of the wireless terminal is larger than a reference movement frequency.

8. The method as claimed in claim 6, wherein the wireless terminal comprises an unlicensed mobile access (UMA) for performing the communication service through the GERAN/UTRAN network and the wireless network.

9. The method as claimed in claim 6, wherein the communication mode of the wireless terminal comprises at least one of a GERAN/UTRAN communication mode through the GERAN/UTRAN network and an UMA communication mode through the wireless communication mode.

10. The method as claimed in claim 6, wherein the GERAN/UTRAN mode comprises a general GERAN/UTRAN mode and a GERAN/UTRAN recommendation mode.

11. The method as claimed in claim 6, wherein the UMA mode comprises a general UMA mode and an UMA recommendation mode.
